# EUROPÄISCHE PATENTSCHRIFT

(11) **EP 3 180 223 B1**
(45) Veröffentlichungstag und Bekanntmachung des Hinweises auf die Patenterteilung: **27.05.2020**
(21) Anmeldenummer: 15778256.6
(22) Anmeldetag: 05.10.2015
(51) Int. Cl.: B61D 17/12, B61D 27/00, B61D 17/02

(54) **SCHIENENFAHRZEUG MIT KLIMAANLAGE**
RAIL VEHICLE HAVING AN AIR-CONDITIONING SYSTEM
VÉHICULE FERROVIAIRE MUNI D'UN SYSTÈME DE CLIMATISATION

(30) Priorität: 13.10.2014 DE 102014220667
(43) Veröffentlichungstag der Anmeldung: 21.06.2017
(73) Patentinhaber: Siemens Mobility GmbH, 81739 München (DE)
(72) Erfinder: KARSCHNIA, Christoph, 47506 Neukirchen-Vluyn (DE); KASAP, Irfan, 44653 Herne (DE)
(86) Internationale Anmeldenummer: PCT/EP2015/072902
(87) Internationale Veröffentlichungsnummer: WO 2016/058853

(56) Entgegenhaltungen:
- EP-A1- 2 762 337
- WO-A1-2014/081032
- WO-A1-2014/147891
- JP-A- 2012 126 351
- US-A1- 2013 133 344

## Beschreibung

Die Erfindung bezieht sich auf ein Schienenfahrzeug mit einer Klimaanlage, die einen Kältekreislauf aufweist, welcher einen inneren Wärmeübertrager umfasst, nach dem Oberbegriff von Anspruch 1. Ein solches Schienenfahrzeug ist beispielsweise aus der JP 2012 126 351 A bekannt.

Bei solchen Schienenfahrzeugen werden häufig Lüfter zur Entwärmung eingesetzt. Besonders im Hochgeschwindigkeits-Schienenverkehr gewinnt ein Impulsverlust, der sich aus dem Betrieb der Lüfter ergibt, eine hohe Bedeutung. Zudem ist der Luftwiderstand des Fahrzeugs zu beachten, der maßgeblich von den Geometrien des Fahrzeugs, wie beispielsweise der Gestaltung der Dachlandschaften und/oder des Profils abhängt. Somit haben Dachaufbauten, Luftein- und -auslässe bei einem Schienenfahrzeug direkten Einfluss auf die für den Luftwiderstand maßgeblichen Geometrien und somit indirekt auf eine erforderliche Traktionsleistung und die Eigenschaften des Schienenfahrzeugs.

Bei Schienenfahrzeugen zur Personenbeförderung sind aufgrund der einschlägigen Normung für die Komfortklimatisierung definierte Frischluftmengen und Innenraumtemperaturen in Abhängigkeit von Außentemperaturen zwingend einzuhalten.

Ausgehend hiervon, besteht die Aufgabe, ein Schienenfahrzeug bereitzustellen, welches die erforderliche Komfortklimatisierung mit möglichst niedrigem Energie- und damit auch Traktionsbedarf bereitstellen kann.

Diese Aufgabe wird durch ein Schienenfahrzeug mit den Merkmalen des Anspruchs 1 gelöst.

Dabei kann die Baueinheit aus Strömungskanal und äußerem Wärmeübertrager statisch ausgebildet sein, so dass der äußere Wärmeübertrager ständig in einem Luftstrom steht, wenn das Schienenfahrzeug in Fahrt ist. Der betreffende Luftstrom wird durch geeignete Auslegung des Strömungskanals herbeigeführt. In dieser Weise kann ohne zusätzlichen Lüfter ein Beitrag zur Entwärmung eines Kältemittels, welches beim Betrieb des Kältekreislaufs zum Einsatz kommt, geleistet werden, und zwar mit Hilfe des äußeren Wärmeübertragers.

Der Strömungskanal und der äußere Wärmeübertrager bilden eine verfahrbare Baueinheit, die zwischen einer eingefahrenen Position und einer ausgefahrenen Position, bei der der Strömungskanal von dem angrenzenden Außenhautbereich aus vorsteht, einstellbar ist. Dadurch ergibt sich im Strömungskanal ein einstellbar großer freier Querschnitt, der von Fahrtwind durchströmbar ist.

Der zwischen den beiden Positionen verfahrbare Strömungskanal mit zugehörigem äußeren Wärmeübertrager kann grundsätzlich an jeder geeigneten Stelle im Bereich der Außenhaut des Schienenfahrzeugs angeordnet sein. Es ist jedoch bevorzugt, wenn der Außenhautbereich, in dem der Strömungskanal und der äußere Wärmeübertrager angeordnet sind, ein Dachlängsabschnitt des Schienenfahrzeugs ist. In diesem Fall ergibt sich eine Höhenverstellbarkeit für die Baueinheit aus dem Strömungskanal und dem äußeren Wärmeübertrager. Diese Baueinheit kann über Spindelantriebe und Führungsbolzen höhenverstellbar sein. Eingesetzte Spindelantriebe können dann in geeigneter Weise an einem Fahrzeugrohbau des Schienenfahrzeugs abgestützt sein.

Der äußere Wärmeübertrager kann über einen Wasser-Glykol-Kreislauf mittels flexiblen Schläuchen mit dem inneren Wärmeübertrager des Kältekreislaufs der Klimaanlage verbunden sein. In dieser Weise ergibt sich ein günstiger Anschluss des äußeren Wärmeübertragers an den inneren, wobei Höhenverstellbarkeit des äußeren Wärmeübertragers und des Strömungskanals gewährleistet sind.

Eine Ausfahrhöhe der Baueinheit aus dem Strömungskanal und dem äußeren Wärmeübertrager kann derart geregelt sein, dass mit zunehmendem Druck im Kältekreislauf die Baueinheit aus dem Strömungskanal und dem äußeren Wärmeübertrager weiter ausgefahren wird. Eine solche Regelung wird günstigerweise mit Hilfe von Messwerten eines Hochdruckpressostaten des Kältekreislaufs der Klimaanlage vorgenommen.

Bevorzugt kann unterhalb des äußeren Wärmeübertragers ein Lüfter zum Beaufschlagen der Wärmeübertragers mit Kühlluft angeordnet sein. Um den äußeren Wärmeübertrager in die Lage zu versetzen, auch bei Stillstand des Schienenfahrzeugs die auf ihn entfallene Entwärmung zu verwirklichen, wird dieser Lüfter in diesem Betriebsfall zugeschaltet. Sobald das Schienenfahrzeug ausreichend Fahrt aufgenommen hat, kann der Lüfter wieder abgeschaltet werden.

Der Strömungskanal kann bevorzugt aus glasfaserverstärktem Kunststoff hergestellt sein. Dies gestattet insbesondere eine strömungsgünstige Formgebung für den Strömungskanal, so dass der in seinem Inneren angeordnete äußere Wärmeübertrager in geeigneter Weise von Außenluft angeströmt ist.

Der Strömungskanal kann sich bevorzugt in Querrichtung des Schienenfahrzeugs über wenigstens 50 % der maximalen Fahrzeugbreite erstrecken. Dies gestattet es, den äußeren Wärmeübertrager eher flach auszulegen, da ein großer Anteil der zur Verfügung stehenden Fahrzeugbreite nutzbar ist.

Der Strömungskanal kann sich in Längsrichtung des Schienenfahrzeugs über eine Länge von wenigstens dem Zehnfachen eines hydraulischen Querschnitts des äußeren Wärmeübertragers erstrecken. Eine solche Auslegung des Strömungskanals gewährleistet eine zuverlässige Anströmung des äußeren Wärmeübertragers, wenn sich die Baueinheit in ausgefahrener Position befindet.

Der Strömungskanal kann bevorzugt einen flachen Dachabschnitt und zwei, von dem Dachabschnitt seitlich ausgehende, einander gegenüberliegende Flankenabschnitte aufweisen, die jeweils zu dem flachen Dachabschnitt in einem Winkel von 90° bis 135°stehen. In dieser Weise wird ein günstig bemessener Innenraum des Strömungskanals zur Verfügung gestellt, in dem der äußere Wärmetauscher unterbringbar ist.

Ein Ausführungsbeispiel der Erfindung wird nachfolgend unter Bezugnahme auf die Zeichnungen noch näher erläutert:
Es zeigen:
- Figur 1: eine schematische Längsschnittansicht eines Längsabschnitts eines Schienenfahrzeugs und
- Figur 2: eine schematische Ansicht von vorn des Schienenfahrzeugs von Figur 1.

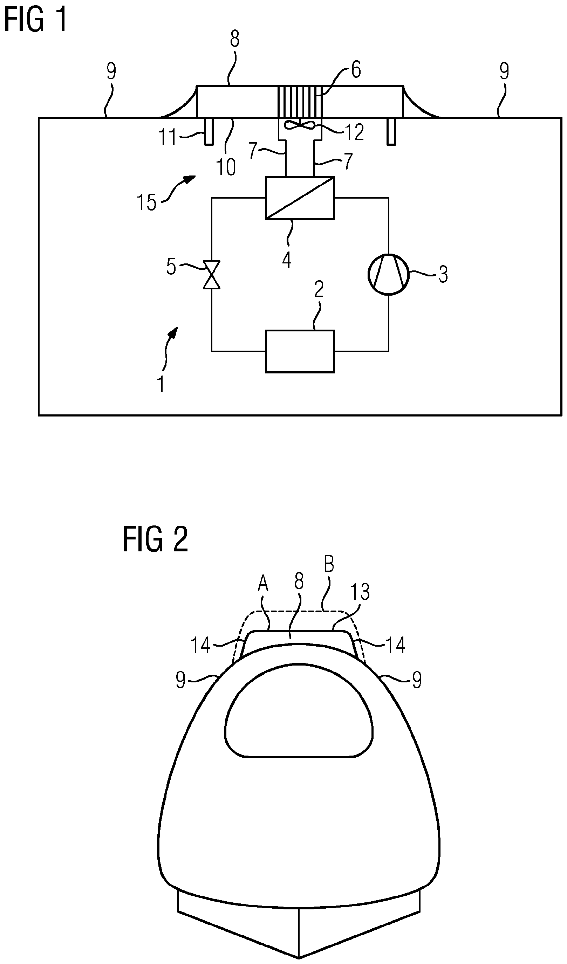

Wie aus Figur 1 hervorgeht, ist ein Schienenfahrzeug mit einem zu einer Klimaanlage gehörenden Kältekreislauf 1 ausgestattet, der in herkömmlicher Weise einen Verdampfer 2, einen Verdichter 3, einen hier als Verflüssiger wirkenden inneren Wärmeübertrager 4 und ein Expansionsventil 5 aufweist. Der Kältekreislauf 1 wird mit einem herkömmlichen Kältemittel, wie beispielsweise "R134a", betrieben. Der als Verflüssiger wirkende Wärmeübertrager 4 ist gleichzeitig Bestandteil eines Wasser-Glykol-Kreislaufs 5. Dieser wird vervollständigt durch einen äußeren Wärmeübertrager 6 und flexible Leitungen 7, welche die Sekundärseite des Wärmeübertragers 4 mit dem äußeren Wärmeübertrager 6 verbinden.

Der äußere Wärmeeübertrager 6 bildet ein Baueinheit mit einem sich in Längsrichtung des Schienenfahrzeugs erstreckenden Strömungskanal 8 und ist mit diesem gemeinsam höhenverstellbar befestigt. In der in Figur 1 dargestellten herausgefahrenen Position der Baueinheit aus Strömungskanal 8 und Wärmeübertrager 6 steht diese Baueinheit von einem angrenzenden Außenhautbereich 9 des Schienenfahrzeug aus vor. Dazu weist die Außenhaut des Schienenfahrzeugs eine an die Abmessungen des Strömungskanals 8 angepasste Öffnung 10 auf, so dass die Baueinheit aus dem Strömungskanal 8 und dem äußeren Wärmeübertrager 6 durch die Öffnung 10 hindurch in eine äußerste herausgefahrene Position und in eine äußerste eingefahrene Position verbringbar ist, und zwar im dargestellten Ausführungsbeispiel mit Hilfe von Spindelantrieben 11, die in geeigneter Weise an einem Rohbau des Schienenfahrzeugs abgestützt sind. Mit Hilfe von Führungsbolzen (nicht dargestellt) wird der Verfahrweg für die Baueinheit aus dem Strömungskanal 8 und dem Wärmeübertrager 6 festgelegt.

Die langgestreckte Öffnung 10 befindet sich in einem Dachlängsabschnitt des Schienenfahrzeugs. In anderen Ausführungsformen können vergleichbare Öffnungen auch in anderen Außenhautbereichen des Schienenfahrzeugs vorgesehen sein, so dass an einem solchen Ort ebenfalls ein äußerer Wärmeübertrager ausfahrbar ist und mit einem zugehörigen inneren Kältekreis zusammenwirken kann. Ein solcher äußerer Wärmeübertrager würde mit einem dem Strömungskanal 8 vergleichbaren Strömungskanal eine Baueinheit bilden.

Für den Fall, dass das Schienenfahrzeug stillsteht, ist zum Bereitstellen der sonst von dem Fahrtwind am Wärmeübertrager 6 geleisteten Entwärmung ein Lüfter 12 vorgesehen, der bei Stillstand des Schienenfahrzeugs eingesetzt wird, gegebenenfalls noch bei sehr niedrigen Fahrgeschwindigkeiten.

Der Strömungskanal 8 ist spiegelbildlich konstruiert, so dass er fahrtrichtungsunabhängig arbeiten kann. Der äußere Wärmeübertrager ist in der Mitte des Strömungskanals 8 installiert.

Die Darstellung von Figur 2 zeigt zwei verschiedene Ausfahrpositionen des Strömungskanals 8, wobei eine erste Position A mit durchgezogener und eine zweite, weiter außen liegende Position B mit gestrichelter Linie veranschaulicht ist. Die innere Position A liegt beispielsweise bei höherer Geschwindigkeit des Schienenfahrzeugs vor, bei der aufgrund der großen Relativgeschwindigkeit zwischen Außenluft und Schienenfahrzeug ein vergleichsweise geringer freier Querschnitt des Strömungskanals 8 für eine wirksame Entwärmung an dem äußeren Wärmetauscher 6 ausreicht. Zu niedrigeren Geschwindigkeiten hin wird der Strömungskanal 8 immer weiter nach außen ausgefahren, bis beispielsweise die Position B erreicht ist.

Zum Regeln einer Ausfahrhöhe der Baueinheit aus dem Strömungskanal 8 und dem äußeren Wärmeübertrager 6 dient ein Hochdruckpressostat des Kältekreislaufs 1, wobei ein zunehmender Druck im Kältekreislauf dazu führt, dass der Strömungskanal 8 und der äußere Wärmeübertrager 6 weiter ausgefahren werden.

Der Strömungskanal 8 ist aus glasfaserverstärktem Kunststoff hergestellt und erstreckt sich in Querrichtung des Schienenfahrzeugs über wenigstens 50 % dessen maximaler Fahrzeugbreite. Der Strömungskanal erstreckt sich in Längsrichtung des Schienenfahrzeugs über eine Länge von wenigstens dem Zehnfachen eines hydraulischen Querschnitts des äußeren Wärmeübertragers. Die allgemeine Form des Strömungskanals 8 ist dadurch gekennzeichnet, dass ein flacher Dachabschnitt 13 vorliegt, von dem seitlich zwei gegenüberliegende Flankenabschnitte 14 ausgehen, die zu dem flachen Dachabschnitt 13 in einem Winkel von 90° bis 135°stehen.

## Patentansprüche

1. Schienenfahrzeug mit einer Klimaanlage, die einen Kältekreislauf (1) aufweist, welcher einen inneren Wärmeübertrager (4) umfasst, wobei der innere Wärmeeübertrager (4) klimatechnisch mit einem äußeren Wärmeübertrager (6) verbunden ist, der innerhalb eines in Längsrichtung des Schienenfahrzeugs verlaufenden und jenseits dessen Außenhaut anordenbaren Strömungskanals (8) angeordnet ist,
**dadurch gekennzeichnet, dass**
der Strömungskanal (8) und der äußere Wärmeübertrager (6) eine verfahrbare Baueinheit bilden, die zwischen einer eingefahrenen Position und einer ausgefahrenen Position, bei der der Strömungskanal (8) von dem angrenzenden Außenhautbereich (9) aus vorsteht, einstellbar ist.

2. Schienenfahrzeug nach Anspruch 1,
**dadurch gekennzeichnet, dass**
der Außenhautbereich (9) ein Dachlängsabschnitt des Schienenfahrzeuges ist.

3. Schienenfahrzeug nach Anspruch 1 oder 2,
**dadurch gekennzeichnet, dass**
die Baueinheit aus dem Strömungskanal (8) und dem äußeren Wärmeübertrager (6) über Spindelantriebe (11) und Führungsbolzen höhenverstellbar ist.

4. Schienenfahrzeug nach einem der Ansprüche 1 bis 3,
**dadurch gekennzeichnet, dass**
der äußere Wärmeübertrager (6) über einen Wasser-Glykol-Kreislauf (5) mittels flexiblen Schläuchen (7) mit dem inneren Wärmeübertrager (4) des Kältekreislaufs (1) der Klimaanlage verbunden ist.

5. Schienenfahrzeug nach einem der Ansprüche 1 bis 4,
**dadurch gekennzeichnet, dass**
eine Ausfahrhöhe der Baueinheit aus dem Strömungskanal (8) und dem äußeren Wärmeübertrager (6) über einen Hochdruckpressostaten des Kältekreislaufs (1) der Klimaanlage derart geregelt ist, dass mit zunehmendem Druck im Kältekreislauf (1) die Baueinheit aus dem Strömungskanal (8) und dem äußeren Wärmeübertrager (6) weiter ausgefahren wird.

6. Schienenfahrzeug nach einem der Ansprüche 1 bis 5,
**dadurch gekennzeichnet, dass**
unterhalb des äußeren Wärmeübertragers (6) ein Lüfter (12) zum Beaufschlagen der Wäreübertragers (6) mit Kühlluft angeordnet ist.

7. Schienenfahrzeug nach einem der Ansprüche 1 bis 6,
**dadurch gekennzeichnet, dass**
der Strömungskanal (8) aus glasfaserverstärktem Kunststoff hergestellt ist.

8. Schienenfahrzeug nach einem der Ansprüche 1 bis 7,
**dadurch gekennzeichnet, dass**
der Strömungskanal (8) sich in Querrichtung des Schienenfahrzeugs wenigstens über 50 % der maximalen Fahrzeugbreite erstreckt.

9. Schienenfahrzeug nach einem der Ansprüche 1 bis 8,
**dadurch gekennzeichnet, dass**
der Strömungskanal (8) sich in Längsrichtung des Schienenfahrzeugs über eine Länge von wenigstens dem Zehnfachen eines hydraulischen Querschnitts des äußeren Wärmeübertragers erstreckt.

10. Schienenfahrzeug nach einem der Ansprüche 1 bis 9,
**dadurch gekennzeichnet, dass**
der Strömungskanal (8) einen flachen Dachabschnitt (13) und zwei, von dem Dachabschnitt seitlich ausgehende, einander gegenüberliegende Flankenabschnitte (14) aufweist, die jeweils zu dem flachen Dachabschnitt in einem Winkel von 90° bis 135° stehen.

## Claims

1. Rail vehicle having an air-conditioning system which has a refrigeration circuit (1), which comprises an inner heat exchanger (4), wherein the inner heat exchanger (4) is connected in terms of air-conditioning to an outer heat exchanger (6) which is arranged within a flow channel (8) which extends in the longitudinal direction of the rail vehicle and can be arranged beyond the outer skin thereof,
**characterized in that**
the flow channel (8) and the outer heat exchanger (6) form a movable constructional unit which can be adjusted between a retracted position and an extended position, in which the flow channel (8) protrudes from the adjacent outer skin region (9).

2. Rail vehicle according to Claim 1,
**characterized in that**
the outer skin region (9) is a roof longitudinal portion of the rail vehicle.

3. Rail vehicle according to Claim 1 or 2,
**characterized in that**
the constructional unit consisting of the flow channel (8) and the outer heat exchanger (6) can be adjusted in height via spindle drives (11) and guide bolts.

4. Rail vehicle according to one of Claims 1 to 3,
**characterized in that**
the outer heat exchanger (6) is connected to the inner heat exchanger (4) of the refrigeration circuit (1) of the air-conditioning system via a water-glycol circuit (5) by means of flexible hoses (7).

5. Rail vehicle according to one of Claims 1 to 4,
**characterized in that**
an extension height of the constructional unit consisting of the flow channel (8) and the outer heat exchanger (6) is controlled via a high-pressure pressostat of the refrigeration circuit (1) of the air-conditioning system in such a manner that, as the pressure in the refrigeration circuit (1) increases, the constructional unit consisting of the flow channel (8) and the outer heat exchanger (6) is extended further.

6. Rail vehicle according to one of Claims 1 to 5,
**characterized in that**
a ventilator (12) is arranged below the outer heat exchanger (6) for subjecting the heat exchanger (6) to cooling air.

7. Rail vehicle according to one of Claims 1 to 6,
**characterized in that**
the flow channel (8) is produced from glass-fibre-reinforced plastic.

8. Rail vehicle according to one of Claims 1 to 7,
**characterized in that**
the flow channel (8) extends at least over 50% of the maximum vehicle width in the transverse direction of the rail vehicle.

9. Rail vehicle according to one of Claims 1 to 8,
**characterized in that**
the flow channel (8) extends over a length of at least ten times a hydraulic cross section of the outer heat exchanger in the longitudinal direction of the rail vehicle.

10. Rail vehicle according to one of Claims 1 to 9,
**characterized in that**
the flow channel (8) has a flat roof portion (13) and two mutually opposite flank portions (14) which emerge laterally from the roof portion and are each at an angle of 90° to 135° with respect to the flat roof portion.

## Revendications

1. Véhicule ferroviaire comprenant une installation de conditionnement d'air, qui a un circuit (1) froid, lequel comprend un échangeur de chaleur (4) intérieur, l'échangeur de chaleur (4) intérieur communiquant, en technique de conditionnement d'air, avec un échangeur de chaleur (6) extérieur, qui est monté dans un conduit (8) d'écoulement s'étendant dans la direction longitudinale du véhicule ferroviaire et pouvant être monté au-delà de sa peau extérieur,
**caractérisé en ce que**
le conduit (8) d'écoulement et l'échangeur de chaleur (6) extérieur forment une unité de construction, qui peut être déplacée et qui peut être réglée entre une position escamotée et une position déployée, dans laquelle le conduit (8) d'écoulement est en saillie de la partie (9) de peau extérieure voisine.

2. Véhicule ferroviaire suivant la revendication 1,
**caractérisé en ce que**
la partie (9) de peau extérieure est un tronçon longitudinal de toit du véhicule ferroviaire.

3. Véhicule ferroviaire suivant la revendication 1 ou 2,
**caractérisé en ce que**
l'unité de construction, composée du conduit (8) d'écoulement et de l'échangeur de chaleur (6) extérieur, est réglable en hauteur par des entraînements (11) à broche et des broches guides.

4. Véhicule ferroviaire suivant l'une des revendications 1 à 3,
**caractérisé en ce que**
l'échangeur de chaleur (6) extérieur est relié, par l'intermédiaire d'un circuit (5) eau-glycol, au moyen de conduits (7) souples, à l'échangeur de chaleur (4) intérieur du circuit (1) froid de l'installation de conditionnement d'air.

5. Véhicule ferroviaire suivant l'une des revendications 1 à 4,
**caractérisé en ce qu'**
un niveau de sortie de l'unité de construction, composée du conduit (8) d'écoulement et de l'échangeur (6) extérieur, est réglé par un pressostat de haute pression du circuit (1) froid de l'installation de conditionnement d'air, de manière à ce que l'unité de construction, composée du conduit (8) d'écoulement et de l'échangeur de chaleur (6) extérieur, continue à sortir au fur et à mesure qu'augmente la pression dans le circuit (1) froid.

6. Véhicule ferroviaire suivant l'une des revendications 1 à 5,
**caractérisé en ce qu'**
un ventilateur (12) d'alimentation en air de refroidissement de l'échangeur de chaleur (6) extérieur est disposé en dessous de l'échangeur de chaleur (6).

7. Véhicule ferroviaire suivant l'une des revendications 1 à 6,
**caractérisé en ce que**
le conduit (8) d'écoulement est en matière plastique renforcée par de la fibre de verre.

8. Véhicule ferroviaire suivant l'une des revendications 1 à 7,
**caractérisé en ce que**
le conduit (8) d'écoulement s'étend, suivant la section transversale du véhicule ferroviaire, au moins sur 50% de la largeur maximum du véhicule.

9. Véhicule ferroviaire suivant l'une des revendication 1 à 8, **caractérisé en ce que**
le conduit (8) d'écoulement s'étend dans la direction longitudinale du véhicule ferroviaire, sur une longueur d'au moins dix fois une section transversale hydraulique de l'échangeur de chaleur extérieur.

10. Véhicule ferroviaire suivant l'une des revendications 1 à 9,
**caractérisé en ce que** le conduit (8) d'écoulement a un tronçon (13) plat de toit et deux tronçons (14) de flanc, partant latéralement du tronçon de toit et opposés l'un à l'autre, qui font un angle de 90° à 135° chacun avec le tronçon plat de toit.
